# EUROPÄISCHE PATENTSCHRIFT

(11) **EP 2 907 072 B1**
(45) Veröffentlichungstag und Bekanntmachung des Hinweises auf die Patenterteilung: **10.05.2017**
(21) Anmeldenummer: 13774395.1
(22) Anmeldetag: 04.10.2013
(51) Int. Cl.: G06F 21/52

(54) **VERFAHREN ZUR STEUERUNG EINES GETRENNTEN ABLAUFS VON VERKNÜPFTEN PROGRAMMBLÖCKEN UND STEUERGERÄT**
METHOD FOR CONTROLLING SEPARATED RUNNING OF LINKED PROGRAM BLOCKS AND CONTROL DEVICE
PROCÉDÉ DE COMMANDE D'UN DÉROULEMENT SÉPARÉ DE BLOCS DE PROGRAMME ENCHAÎNÉS ET APPAREIL DE COMMANDE

(30) Priorität: 09.10.2012 DE 102012218363
(43) Veröffentlichungstag der Anmeldung: 19.08.2015
(73) Patentinhaber: Continental Automotive GmbH, 30165 Hannover (DE)
(72) Erfinder: GÖBEL, Andre, 93053 Regensburg (DE); PETKOV, Thomas, 84030 Ergolding (DE)
(86) Internationale Anmeldenummer: PCT/EP2013/070696
(87) Internationale Veröffentlichungsnummer: WO 2014/056794

(56) Entgegenhaltungen:
- EP-A1- 2 187 185
- US-A- 5 027 317
- US-A1- 2003 233 565
- US-A1- 2007 157 003

## Beschreibung

Die vorliegende Erfindung betrifft die Steuerung sicherheitsrelevanter Systeme in Kraftfahrzeugen mittels eines Prozessors und betrifft insbesondere die Steuerung eines getrennten Ablaufs von verknüpften Programmblöcken, mit denen Funktionen der sicherheitsrelevanten Systeme umgesetzt werden.

### Stand der Technik

Es ist bekannt, sicherheitsrelevante Funktionen, insbesondere Funktionen der Motorsteuerung, mittels einer Datenverarbeitungsvorrichtung zu realisieren, wobei ein Prozessor der Datenverarbeitungsvorrichtung ein Programm verarbeitet, das auf dem Prozessor ablauffähig ist. Da fehlerhafte Funktionen unmittelbare Auswirkungen auf die Sicherheit des Fahrzeugs haben, werden Sicherheitsmaßnahmen bei der Darstellung der Programmabschnitte angewandt. Unterschiedliche Programmabschnitte können auch unterschiedlichen Sicherheitsstufen angehören, so dass verschiedene Programmabschnitte bzw. Unterprogramme unterschiedlichen Klassen zugeordnet sind. Die Norm ISO 26262 sieht für Kraftfahrzeuge insgesamt fünf verschiedene Einstufungen vor, die als ASIL A-D oder QM bezeichnet werden. Um die Sicherheitsstufe jedes Programmabschnitts auch beim Ablauf auf den Prozessor gewährleisten zu können, ist es erforderlich, dass Programmabschnitte unterschiedlicher Sicherheitsklassifizierung während des Ablaufs sich nicht gegenseitig beeinflussen.

Um diese Trennung des Ablaufs zu gewährleisten, werden explizite Switch-Befehle einer übergeordneten Ablaufsteuerung verwendet, oder werden als individuelle Prozesse der untersten Systemebene (tasks) ausgeführt. Gemäß einem weiteren bekannten Ansatz werden mehrere Prozessorkerne verwendet, wobei jeder Kern einer bestimmten Sicherheitsklasse zugeordnet ist, so dass nur Unterprogramme einer bestimmten Sicherheitsklassifizierung auf einem bestimmten Kern ablaufen und nicht auf den anderen Kernen. Diese Ansätze sind ineffizient, da sie zusätzlichen Rechenaufwand bzw. aufwendige Prozessorarchitekturen erfordern.

Die Druckschrift EP 2 187 185 A1 beschreibt ein Feldgerät mit getrennten Speicherbereichen, die in einem Datenspeicher vorliegen. In den Speicherbereichen sind Daten für verschiedene Programmmodule hinterlegt, die eine unterschiedliche Sicherheitsrelevanz haben, wobei eine Speicherverwaltungseinheit die Zugriffe auf diese Datenspeicherbereiche kontrolliert. Es werden nur Zugriffe auf Daten gesteuert, die unterschiedlichen Programmmodulen zugeordnet sind.

Die Druckschrift US 5,027,317 betrifft einen Mechanismus zur Zugriffsbeschränkung eines RAM-Speichers. Es wird eine mobile RAM-Kassette verwendet, in der ein Programm gespeichert ist. Es wird durch die dort beschriebene Zugriffsbeschränkung sichergestellt, dass dieses Programm nicht von Daten überschrieben wird.

Die in den genannten Druckschriften erwähnten Mechanismen betreffen somit Zugriffe auf Daten sowie deren Beschränkung. Eine Ablaufsteuerung wird etwa durch ein zusätzliches Betriebssystem realisiert.

Es ist daher eine Aufgabe der Erfindung, eine Vorgehensweise aufzuzeigen, mit der sich Unterprogramme unterschiedlicher Sicherheitsklassifizierung in effizienter Weise getrennt ausgeführt werden können.

### Offenbarung der Erfindung

Diese Aufgabe wird gelöst durch den Gegenstand der unabhängigen Ansprüche. Weitere vorteilhafte Aspekte ergeben sich aus den Merkmalen der abhängigen Ansprüche.

Anstatt der unsicheren Auftrennung nur anhand von Tasks, Prozessorkernen oder mittels einer ineffektiven Umschaltung durch ein übergeordnetes Programm, wie es der Stand der Technik vorschlägt, ist vorgesehen, den Ablauf verknüpfter Programmblöcke mittels einer Speicherüberwachung zu trennen. Zu trennende Programmblöcke oder Daten werden in unterschiedlichsten Abschnitten des Speichers vorgesehen. Hierbei sind Programmblöcke in sog. Abschnitten im Speicher vorgesehen, während Daten in spezifischer bezeichneten Datenabschnitten eines Speichers vorgesehen sind. Die Trennung wird erreicht, indem Programmblöcke bzw. Daten, die in ihrem Ablauf bzw. Zugriff zu trennen sind, in unterschiedlichen Abschnitten vorgesehen sind. Eine Speicherüberwachung, insbesondere eine Speicherschutzeinrichtung, gibt immer nur den aktuell ablaufenden Abschnitt bzw. den aktuellen Datenabschnitt frei, während andere Abschnitte bzw. Datenabschnitte im Zugriff gesperrt sind. Insbesondere wird von der Speicherüberwachung nur der Schreibzugriff auf Daten blockiert, wohingegen ein Lesezugriff von der Speicherüberwachung möglich sein kann. Hinsichtlich Daten kann die Sperrung daher eine Schreibsperrung sein. Wird abschnittsübergreifend ein weiterer Programmblock aufgerufen bzw. datenabschnittübergreifend auf Daten zugegriffen, so löst die Speicherüberwachung eine Ausnahme aus. Anhand dieser Ausnahme wird der Abschnitt bzw. Datenabschnitt, der dem aufgerufenen, neuen Programmblock angehört, freigegeben, und der vorherige, Abschnitt bzw. Datenabschnitt, der dem aufrufenden Programmblock zugehört, wird gesperrt.
Der hier beschriebene Mechanismus basiert somit auf der Verwendung einer Speicherschutzeinrichtung, wie einen Übergriff von eigentlich zu trennenden Programmblöcken bzw. Daten erfasst und eine Ausnahme auslöst. Anhand dieser Ausnahme ändert der Ausnahmehandler die Freigabe bzw. Sperrung, so dass andere Daten bzw. Programmblöcke zugreifbar bzw. ausführbar sind. Der Ausnahmehandler aktiviert somit immer nur eine Art von Programmblöcken oder Daten, indem der betreffende Abschnitt bzw. Datenabschnitt freigegeben wird, während andere gesperrt werden. Um die Daten bzw. Programmblöcke hinsichtlich der Sicherheitsstufe zu unterscheiden, werden die Daten bzw. Programmblöcke gemäß ihrer Sicherheitsstufe in unterschiedlichen Datenabschnitten bzw. Abschnitten hinterlegt.

Diese Trennung der Programmblöcke bzw. Daten in unterschiedliche Abschnitte bzw. Datenabschnitte dient der Speicherüberwachung als Unterscheidungsmerkmal, mittels der die unterschiedlichen Sicherheitsstufen erfasst werden. Die Trennung hinsichtlich der Ausführung und des Zugriffs wird durch das Freigeben und Sperren aufgrund der aufgetretenen Ausnahme realisiert.

Es wird daher ein Verfahren zur Steuerung eines getrennten Ablaufs von verknüpften Programmblöcken offenbart. Die Programmblöcke, deren getrennter Ablauf gesteuert wird, sind dadurch verknüpft, dass im Rahmen eines Programmblocks ein weiterer der Programmblöcke aufgerufen wird. Insbesondere wird innerhalb eines Programblocks ein weiterer Programmblock als Unterprogramm aufgerufen, beispielsweise als Funktion oder als Prozedur, die Teil des aufrufenden Programmblocks oder aber eine Unterbrechung ist. Beim Aufruf eines Programmblocks als Funktion können Parameter von einem aufrufenden Programmblock an den aufgerufenen Programmblock weitergegeben werden. Die Programmblöcke werden als aufrufender Programmblock und als aufgerufener Programmblock bezeichnet, wobei der aufrufende Programmblocks auch als erster Programmblock bezeichnet werden kann und der zweite Programmblock als aufgerufener Programmblock bezeichnet werden kann. Die letztgenannte Zuordnung hängt jedoch von der aktuellen Situation des Aufrufs ab und kann sich ändern. Ein aufrufender Programmblock kann insbesondere auch mehrere Programmblöcke aufrufen, so dass verfahrensgemäß ein oder mehrere zweite Programmblöcke bestehen. Ferner können mehrere aufrufende Programmblöcke bestehen, die einen oder mehrere Programmblöcke aufrufen, die verschieden sein können. Es bestehen somit ein oder mehrere erste Programmblöcke.

Es können Interrupts, d.h. Unterbrechungen, als ein Programmblock oder als ein Unterprogramm (wie hierin beschrieben) angesehen werden. Dies kann auch gelten, wenn ein als Interrupt vorgesehener Programmblock oder ein als Interrupt vorgesehenes Unterprogramm nicht explizit aufgerufen wird sondern auf andere Weise ausgeführt oder ausgelöst wird.

Ein Programmblock, der von einem ersten Programmblock aufgerufen wird, kann ebenso einen oder mehrere weitere Programmblöcke aufrufen. Daher sind die Attribute aufgerufener, aufrufender, erster und zweiter Programmblock jeweils situationsabhängig und bezeichnen die Hierarchie zwischen zwei Programmblöcken für die Situation eines Aufrufs. Für die Situation eines weiteren Aufrufs kann die (relative) Hierarchie eine andere sein, so dass sich auch die Bezeichnungen dementsprechend abhängig von der Situation des Aufrufs ändern.

Die Programmblöcke sind zur Umsetzung von Funktionen sicherheitsrelevanter Systeme in Kraftfahrzeugen ausgebildet. Insbesondere sind die Programmblöcke zur Umsetzung von Funktionen im Bereich Antriebsstrang bzw. Funktionen des Antriebstrangs oder Funktionen von weiteren fahrzeugspezifischen Applikationen wie Lenksysteme oder Fahrzeug- oder Insassensicherheitssysteme ausgebildet, beispielsweise Funktionen eines Verbrennungsmotors, eines Elektromotors, der zur Traktion des Kraftfahrzeugs dient, einer elektrischen, elektromechanischen oder mechanischen Bremsvorrichtung des Kraftfahrzeugs, oder eines elektrischen Lenkantriebs. Weitere Funktionen betreffen die optische oder akustische Anzeige von Betriebszuständen, die Zustände der eingangs genannten Funktionen sind.

Derartige Funktionen, die von den Programmblöcken umgesetzt werden, sind ferner beispielsweise die Steuerung der Kraftstoffmenge, der Luftmenge, der Kraftstoffkonstellation, des Einspritzzeitpunkts und/oder des Zündzeitpunkts einer Verbrennungsmaschine des Kraftfahrzeugs. Weitere Funktionen sind Rekuperationszeit und Rekuperationsleistung eines Elektromotors, der zur Wiedergewinnung kinetischer Energie des Fahrzeugs verwendet wird und/oder die Kommutierung eines zur Traktion verwendeten Elektromotors, insbesondere Kommutierungszeitpunkt, Anregungsstromstärke und ggf. Phasenversatz zwischen Anregungsstromstärke und an den Elektromotor anliegende Spannung.

Das Verfahren sieht vor, dass ein erster der Programmblöcke auf einen Prozessor ausgeführt wird. Der ausführende Prozessor kann ein oder mehrere Prozessorkerne aufweisen. Der Prozessor ist vorzugsweise ein Mikrocontroller, insbesondere ein für sicherheitskritische Systeme ausgebildeter Mikrocontroller, beispielsweise ein für Motorsteuerungen ausgebildeter Mikrocontroller. Wie im Weiteren näher dargestellt ist, umfasst der ausführende Prozessor insbesondere eine Speicherschutzeinrichtung sowie vorzugsweise auch einen Ausnahmehandler. Der ausführende Prozessor umfasst insbesondere einen Speicher oder zumindest eine Schnittstelle zum Anschluss eines Speichers.

Es kann ein Vorabschritt vorgesehen sein, der als Start des Verfahrens betrachtet werden kann. Dieser wird insbesondere während des Starts des hier beschriebenen Steuergeräts oder Verfahrens ausgeführt. Dieser Vorabschritt sieht vor, dass eine Speicherschutzeinrichtung konfiguriert wird gemäß von Vorgaben, die die hier beschriebene Vorgehensweise unterstützen. Insbesondere wird die Speicherschutzeinrichtung konfiguriert wird gemäß Vorgaben, die Abschnitte des Speichers definieren, insbesondere in Hinblick auf die Zugriffsrechte. Der Vorabschritt sieht somit ein Konfigurieren der Zugriffsüberwachung vor und insbesondere ein Konfigurieren der Zugriffsrechte der Abschnitt und/oder der Programmblöcke. Ferner kann in dem Vorabschritt definiert werden, welcher Programmblock in welchem Abschnitt abgelegt wird und insbesondere, welche Zugriffsrechte der Programmblock bzw. der Abschnitt erhält. Innerhalb des Vorabschritts können auch die Programmblöcke oder zumindest einer hiervon gestartet werden oder über übergeordnetes Programm, in dem die Programmblöcke aufgerufen werden. Das Starten wird vorzugsweise nach dem Konfigurieren ausgeführt.

Der erste Programmblock, der von dem Prozessor ausgeführt wird, liegt in einem ersten Abschnitt des Speichers vor. Der Prozessor greift zum Ausführen des ersten Programmblocks auf den Speicher zu. Der Prozessor ist beim Ausführen des ersten Programmblocks berechtigt, auf den ersten Abschnitt lesend und schreibend zuzugreifen. Der Prozessor ist beim Ausführen des ersten Programmblocks insbesondere berechtigt, innerhalb des ersten Abschnitts vorliegende Programme auszuführen. Der erste Programmblock ist ferner mit Ausführungsrechten versehen, die die Ausführung durch den Prozessor gestatten.

Während des Ausführens des ersten Programmblocks wird ein zweiter Programmblock der genannten Programmblöcke aufgerufen. Dieser Aufruf kann beispielsweise im Rahmen eines Prozedur- oder Funktionsaufrufs geschehen. In diesem Zusammenhang ist der zweite Programmblock als Unterprogramm oder Unterbrechung des ersten Programmblocks zu sehen. Der zweite Programmblock liegt in einem zweiten Abschnitt des Speichers. Der zweite Abschnitt ist verschieden zu dem ersten Abschnitt des Speichers. Verschiedene Abschnitte des Speichers weisen keine Überlappung auf.

Der Zugriff auf den Speicher und insbesondere der Zugriff auf den Speicher im Rahmen einer (beginnenden) Ausführung eines dort hinterlegten Programms wird durch eine Speicherschutzeinrichtung überwacht. Die den Zugriff überwachende Speicherschutzeinrichtung ist insbesondere ein Teil des Prozessors und kann als Hardware ausgeschaltet sein. Alternativ ist die Speicherschutzeinrichtung teilweise als Software ausgestattet, die auf den Prozessor oder auf einer an den Prozessor angeschlossenen Speicherüberwachungsvorrichtung abläuft. Die Speicherschutzeinrichtung kann insbesondere Teil einer Speicherschnittstelle sein, die den Prozessor angehört oder in diesen integriert ist. Die Speicherschutzeinrichtung löst eine Ausnahme aus, wenn bei dem Überwachen des Zugriffs von der Speicherschutzeinrichtung ermittelt wird, dass während des Ausführens des ersten Programmblocks (d.h. des ersten der Programmblöcke) auf den zweiten Abschnitt zugegriffen wird, in denen der zweite Programmblock (d.h. der zweite der Programmblöcke) vorliegt. Die Speicherschutzeinrichtung überwacht somit den Zugriff auf die Abschnitte, in die der Speicher unterteilt ist. Als Zugriff wird insbesondere ein lesender Zugriff bezeichnet, vorzugsweise im Rahmen einer Ausführung durch den Prozessor. Jedoch kann als Zugriff auch ein schreibender Zugriff oder ein schreibender und lesender Zugriff bezeichnet werden. In einer bevorzugten Ausführungsform ist der Zugriff ein Zugriff auf den Speicher durch den Prozessor zum Ausführen eines dort vorliegenden Programmblocks (Unterprogramms oder Funktion). Der Zugriff kann daher einer Ausführung oder einer Vorbereitung einer Ausführung eines Programmblocks entsprechen.

Da die Programmblöcke auf unterschiedliche Abschnitte verteilt sind, kann durch das Überwachen ermittelt werden, wenn ein aufgerufener Programmblock in einem anderen Abschnitt vorliegt als der Programmblock, welcher diesen aufgerufen hat.

Beim Auftreten der Ausnahme sperrt der Ausnahmehandler den ersten Abschnitt des Speichers. Es können auch mehrere erste Abschnitte vorliegen, die gesperrt werden. Das Sperren bezieht sich insbesondere auf die verwendete Zugriffsart, vorzugsweise auf das Ausführen, d.h. auf das Lesen zum Zwecke des Ausführens. Der Ausnahmehandler gibt beim Auftreten der Ausnahme den zweiten Abschnitt zur Ausführung frei. Die Freigabe bezieht sich auf die gleichen Tätigkeiten wie das Sperren bzw. Zugreifen (Lesen, Schreiben) und insbesondere auf das Ausführen.

Insbesondere gibt der Ausnahmehandler den zweiten Abschnitt zum Lesen und vorzugsweise auch zum Ausführen frei. Dadurch ändert der Ausnahmehandler den Abschnitt, in den ausführbare Programmblöcke vorliegen, sowie den Abschnitt, der nicht zur Ausführung freigegeben ist.

Der sperrende bzw. freigebende Ausnahmehandler kann in Form von Hardware vorgesehen sein, insbesondere als Hardware innerhalb des Prozessors, oder als Hardware die an den Prozessor angeschlossen ist. Der Ausnahmehandler kann ferner teilweise oder vollständig in Software vorliegen, die auf dem Prozessor abläuft oder auf einer Ausnahmeverarbeitungsvorrichtung innerhalb des Prozessors oder außerhalb des Prozessors mit Verbindung zu dem Prozessor. Die Hardware, welche die Speicherschutzeinrichtung sowie den Ausnahmehandler realisiert, insbesondere die Speicherüberwachungsvorrichtung oder die Ausnahmeverarbeitungsvorrichtung, ist fest mit dem Prozessor verbunden und ist insbesondere direkt mit diesem verbunden, um unbeabsichtigte Manipulationen zu vermeiden. Beispielsweise wird die Speicherschutzeinrichtung sowie der Ausnahmehandler von einer Speichermanagementeinheit (memory management unit, MMU) vorgesehen, welche vorzugsweise wiederum Teil des Prozessors ist oder als Hardware vorgesehen sein kann, die den Prozessor zugeordnet ist.

Der zweite Programmblock kann während des Ausführens des ersten Programmblocks von einem Task-Manager aufgerufen werden. Bevorzugt wird jedoch der zweite Programmblock von einem Befehl des ersten Programmblocks, insbesondere von einem Funktions- oder Prozeduraufruf des ersten Programmblocks aufgerufen.

Zum Ende des Ausführens des zweiten Programmblocks findet ein Rücksprung statt. Der Rücksprung wird insbesondere ausgelöst durch einen Rücksprungbefehl des zweiten Programmblocks bzw. durch das Ende der Befehle, die den zweiten Programmblock darstellen.

Durch den Rücksprung wird der zweite Abschnitt gesperrt und der erste Abschnitt wird wieder freigegeben. Diese Änderung der Zugriffsrechte kann durch eine weitere Ausnahme vorgesehen werden, die von dem Rücksprung ausgelöst wird. Alternativ wird zum Ende des Ausführens wird per übergeordneter Hardware oder Software eine weitere Ausnahme vorgesehen. Der Ausnahmehandler sperrt bei Auftreten der weiteren Ausnahme bzw. bei Abarbeiten der weiteren Ausnahme den zweiten Abschnitt. Ferner gibt der Ausnahmehandler beim Auftreten bzw. beim Abarbeiten der weiteren Ausnahme den ersten Abschnitt zur Ausführung frei. Durch das Sperren eines Abschnitts wird der Prozessor daran gehindert, einen Programmblock zu verarbeiten, der in dem betreffenden Abschnitt vorliegt. Insbesondere wird durch das Sperren eines Abschnitts das Ausführen von Code in diesem Abschnitt gesperrt. Durch das Freigeben kann der Prozessor zum Ausführen auf den betreffenden Abschnitt zugreifen.

Gemäß einem weiteren Aspekt der Erfindung wird während des Ausführens des ersten oder des zweiten Programmblocks mindestens ein weiterer Programmblock aufgerufen. Ferner löst die Speicherschutzeinrichtung eine Ausnahme aus, wenn der weitere Programmblock aufgerufen wird. Insbesondere löst die Speicherschutzeinrichtung eine Ausnahme aus, wenn der aufrufende Programmblock (d. h. der erste oder der zweite Programmblock) auf einen weiteren Abschnitt des Speichers zugreift, in dem der weitere Programmblock auch vorliegt. Durch diesen Zugriff auf den nicht freigegebenen Abschnitt wird die Ausnahme von der Speicherschutzeinrichtung ausgelöst. Bei Auftreten dieser Ausnahme sperrt der Ausnahmehandler den Abschnitt des Speichers, in welchem der aufrufende Programmblock vorliegt. Der Ausnahmehandler gibt bei Auftreten dieser Ausnahme den Abschnitt des Speichers frei, in welchem der aufgerufene Programmblock vorliegt. Nach dem Freigeben wird der aufgerufene Programmblock von dem Prozessor ausgeführt. Vorzugsweise beginnt hierbei die Ausführung, unmittelbar nachdem der betreffende Abschnitt freigegeben wurde.

Dadurch lassen sich mehr als zwei Hierarchieebenen definieren, die sie wechselweise nicht beeinflussen können, da nur ein Abschnitt des Speichers zur Ausführung des Prozessor freigegeben ist, und nicht mehrere.

Gemäß einem weiteren Aspekt ist der Zugriff auf den zweiten Abschnitt durchgehend gesperrt, während der erste Programmblock ausgeführt wird. Der Zugriff wird hierbei von der Speicherschutzeinrichtung gesperrt. Der Zugriff auf den ersten Abschnitt ist durchgehend gesperrt, während der zweite Programmblock ausgeführt wird. Auch hier sperrt die Speicherschutzeinrichtung den Zugriff auf den Abschnitt. Der Zugriff ist hierbei insbesondere ein Zugriff zum Ausführen eines Programmblocks. Schließlich wird durch die Sperrung ein Schreibzugriff auf den gesperrten Abschnitt des Speichers von der Speicherschutzeinrichtung blockiert.

Ein weiterer Aspekt des hier offenbarten Verfahrens betrifft die Zugriffsrechte auf Daten, während, im Gegensatz hierzu, die vorangehenden Passagen im Wesentlichen auf Abschnitte Bezug nehmen, in denen Programmblöcke vorliegen. Ein bevorzugtes Verfahren wird innerhalb einer Hardware-Struktur ausgeführt, in der Abschnitte des Speichers, in denen Programmblöcke gespeichert sind, von Abschnitten des Speichers getrennt sind, in denen Daten vorliegen. Falls diese Trennung nicht vorgesehen ist, so betrifft die vorangehende Beschreibung Abschnitte, in denen nicht nur Programmblöcke, sondern auch diesen zugehörige Daten vorliegen. Ferner gilt das für in Bezug auf Programmblöcke offenbarte auch für Daten und umgekehrt.

Dem ersten Programmblock ist ein erster Datenabschnitt für Daten zugeordnet, die von dem ersten Programmblock gespeichert und gelesen werden. Dem zweiten Programmblock (und jedem weiteren Programmblock) ist mindestens ein zweiter, zum ersten Abschnitt verschiedener Datenabschnitt für Daten zugeordnet, die von dem zweiten Programmblock gespeichert und gelesen werden. Den Programmblöcken können auch mehrere erste oder mehrere zweite Datenabschnitte zugeordnet sein. Die Datenabschnitte können in dem gleichen Speicher wie die Abschnitte vorgesehen sein, in denen die Programmblöcke vorliegen. Gemäß einer spezifischen Ausführungsform sind verschiedene Speicher vorgesehen, wobei ein Speicher nur Abschnitte in Programmblöcken umfasst, und ein weiterer, dazu verschiedener Speicher nur Datenabschnitte umfasst.

Als Abschnitt, in dem Programmblöcke gespeichert sind, sowie als Datenabschnitt werden logische Gruppen oder Sektionen des Speichers bezeichnet, die insbesondere auf physikalische Segmente oder Seiten abgebildet sind. Logische Gruppen oder Sektionen sind Abschnitte eines Speichers mit variabler Größe; insbesondere kann die Größe für verschiedene Programmblöcke (oder Segmente oder Gruppen) unterschiedlich sein.

Ferner können sich die Größe der Datenabschnitte von den Größen der Abschnitte unterscheiden, in denen die Programmblöcke vorliegen. Zudem können sich die Lagen der Datenabschnitte von den Lagen der Abschnitte unterscheiden, in denen die Programmblöcke vorliegen.

Der Ausnahmehandler sperrt den ersten Datenabschnitt, wenn durch Aufrufen des zweiten Programmblocks durch den ersten Programmblock eine Ausnahme ausgelöst wird. Der Ausnahmehandler sperrt den zweiten Datenabschnitt, wenn durch Aufrufen des ersten Programmblocks durch den zweiten Programmblock eine Ausnahme ausgelöst wird. Ferner wird derjenige Datenabschnitt gesperrt, der einem aufrufenden Programmblock zugeordnet ist. Es wird derjenige Datenabschnitt freigegeben, der dem aufgerufenen Programmblock zugehört.

Gemäß einem weiteren Aspekt der Erfindung ist dem ersten Programmblock eine andere Sicherheitsstufe als dem zweiten Programmblock zugeordnet. In gleicher Weise unterscheiden sich die Sicherheitsstufen, die dem ersten und dem zweiten Datenabschnitt zugeordnet sind. Die Sicherheitsstufe richtet sich vorzugsweise nach dem Standard ISO 26262. Insbesondere sind die Programmblöcke nach dem Standard ISO 26262 ausgebildet. Ferner ist vorgesehen, dass die Programmblöcke gemäß den Einstufungen ASIL A - D oder QM klassifiziert sind. Der erste und der zweite Programmblock sind hierbei unterschiedlich klassifiziert.

Insbesondere befinden sich in einem Abschnitt immer nur Programmblöcke der gleichen Klassifizierung. Auch Datenabschnitte sind immer nur einem oder mehreren Programmblöcken der gleichen Zertifizierung zugeordnet. Durch die Unterscheidung anhand der Klassifizierung lässt sich so durch einfache Speicherschutzmaßnahmen eine Trennung der betreffenden Programmblöcke bzw. Daten erreichen, um Programmblöcke bzw. Daten und unterschiedlicher Sicherheitsklasse beeinflussungsfrei voneinander zu trennen. Neben einer beispielhaften Klassifizierung gemäß Standard ISO 26262 können funktionsrelevante Daten bzw. Programmblöcke, die beispielsweise Kalibrationsdaten sind oder einem Nur-Lese-Speicher zugeordnet sind, von anderen Programmblöcken oder Daten beeinflussungsfrei getrennt werden, auf die dieses nicht zutrifft und für die somit eine andere Sicherheitseinstufung zutrifft. Die Klassifizierung kann beispielsweise eine oder mehrere der folgenden Kriterien umfassen:
(a) Code gemäß vorgegebenen Entwicklungsprozessen entwickelt oder nicht
(b) Code von einer vordefinierten Gruppe von Entwickler oder Herstellern erstellt oder nicht
(c) Plausibilitätsüberprüfung während Laufzeit ausgeführt oder nicht
(d) Datenüberprüfung während Laufzeit ausgeführt oder nicht
(e) Code und Datenein-/ausgabe formal verifiziert oder nicht, ggf. mittels Einzelbefehldurchlauf
(f) Code von weiterer Einrichtung überprüft oder nicht
(g) Beschränkte Zeigernutzung oder nicht
(h) Code statistisch analysiert oder nicht
(i) Modelluntersuchungen zum Code durchgeführt oder nicht
(j) Steuerablauf wird überwacht oder nicht
(k) Gegenseitiger Abgleich zwischen Modell und Code durchgeführt oder nicht
(l) Code mit unterschiedlichen Softwaredesigns erstellt oder nicht
(m) Überwachungseinheit vorgesehen oder nicht
(n) Unabhängige parallele Redundanz vorgesehen oder nicht
(o) Fehlerinjektionstest ausgeführt oder nicht
(p) Ressourcennutzungstest ausgeführt oder nicht
(q) Redundante Speicherung von Kalibrationsdaten vorgesehen oder nicht
(r) Fehlererkennungs- und/oder Fehlerkorrekturcodes vorhanden oder nicht

Gemäß einem weiteren Aspekt ist die Ausnahme ein sogenannter Interrupt oder eine sogenannte Exception, insbesondere ein Hardware-Interrupt oder ein Software-Interrupt. Ferner wird der Interrupt innerhalb oder außerhalb des Prozessors ausgelöst und/oder verarbeitet. Der Interrupt kann maskierbar oder nicht maskierbar sein.

Ferner ist als eine spezifische Ausführungsform vorgesehen, dass eine Ausnahme, die ausgelöst wird, wenn ein Programmblock einen Programmblock mit anderer und insbesondere höherer Sicherheitsstufe aufruft, mit einer anderen und insbesondere höheren Priorität abgearbeitet wird, als eine Ausnahme, die ausgelöst wird, wenn ein Programmblock einen Programmblock mit anderer und insbesondere geringerer Sicherheitsstufe aufruft. Der Ausnahmehandler arbeitet die Ausnahmen gemäß dieser Prioritäten ab. Die Priorität der Abarbeitung der Ausnahme hängt somit von der Sicherheitsstufe des aufgerufenen Programmblocks ab. Je geringer die Sicherheitsstufe des aufgerufenen Programmblocks ist, desto geringer ist die Priorität der dadurch ausgelösten Ausnahme mittels des Ausnahmehandlers. Diese voranstehende Ausführungsform betrifft den spezifischen Fall, dass die Speicherschutzeinrichtung eingerichtet ist, mehrere Ausnahmen abzuarbeiten und ferner vorgesehen ist, dass eine Ausnahme auch dann auftreten oder ausgelöst werden kann, wenn bereits eine Ausnahme ausgelöst wurde, die noch nicht abgearbeitet ist.

Weiterhin wird ein Steuergerät, insbesondere für Fahrzeuge oder für andere hier beschriebene Anwendungen, mit einer Datenverarbeitungsvorrichtung beschrieben. Die Datenverarbeitungsvorrichtung umfasst einen Speicher, einen Prozessor und eine Speicherschutzeinrichtung. Das Steuergerät ist zur Realisierung der oben anhand des Verfahrens beschriebenen Funktionen geeignet. Insbesondere ist somit das Steuergerät eine Getriebesteuerung, eine Antriebsstrangsteuerung, etwa für Hybridfahrzeuge, ein Motorsteuergerät für Verbrennungsmotoren, insbesondere eine Motorsteuereinheit (engine control unit, ECU). Der Speicher, der Prozessor und die Speicherschutzeinrichtung können sie im Rahmen des Verfahrens dargestellt ausgeführt sein.

Der Speicher ist mit dem Prozessor verbunden, so dass der Prozessor Programmblöcke und/oder Daten von dem Speicher lesen und aufrufen und in diesen ablegen kann. Ein erster Programmblock sowie ein zweiter Programmblock sind in ersten und zweiten Abschnitten des Speichers abgelegt. Der erste und der zweite Abschnitt des Speichers sind zueinander verschieden. In den Abschnitten sind ein oder mehrere erste bzw. ein oder mehrere zweite Programmblöcke abgelegt, wobei erste Programmblöcke in anderen Abschnitten abgelegt sind als zweite Programmblöcke. Der erste und der mindestens eine zweite Programmblock sind miteinander verknüpft. Insbesondere enthält der erste Programmblock einen Aufruf des mindestens einen zweiten Programmblocks.

Die Datenverarbeitungsvorrichtung umfasst eine Speicherschutzeinrichtung, deren Programmierung oder deren Verbindung mit dem Speicher die Speicherschutzeinrichtung zum Auslösen einer Ausnahme veranlasst, wenn der erste Programmblock, welcher in einem ersten der Abschnitte abgelegt ist, den zweiten Programmblock aufruft, welcher in dem zweiten Abschnitt abgelegt ist. Hierzu kann, wie oben im Rahmen des Verfahrens bemerkt, die Speicherschutzeinrichtung mittels Hardware, Software oder eine Kombination hiervon realisiert sein. Die Datenverarbeitungsvorrichtung weist ferner einen Ausnahmehandler auf, der mit der Speicherschutzeinrichtung zum Empfang der Ausnahme verbunden ist. Der Ausnahmehandler ist mit dem Speicher verbunden und eingerichtet, um beim Empfang der Ausnahme eine logische Verbindung zwischen dem ersten Abschnitt des Speichers und den Prozessor zu sperren. Der Ausnahmehandler ist ferner eingerichtet, beim Empfang der Ausnahme eine logische Verbindung zwischen dem zweiten Abschnitt des Speichers und den Prozessor zur Ausführung des zweiten Programmblocks auf den Prozessor freizugeben. Auch der Ausnahmehandler kann als Hardware, Software oder Kombination hiervon ausgebildet sein.

Vorzugsweise sind sowohl der Ausnahmehandler als auch die Datenverarbeitungsvorrichtung Teil des Prozessors oder werden von Hardwarekomponenten ausgebildet, die unmittelbar mit dem Prozessor verbunden sind.

Der Ausnahmehandler kann insbesondere eingerichtet sein, logische Verbindungen zwischen dem Prozessor und den Datenabschnitten des Speichers zu sperren und freizugeben, wie es oben anhand des Verfahrens dargestellt ist.

Gemäß einem weiteren Aspekt des hier offenbarten Steuergeräts weist der erste Programmblock eine andere Sicherheitsstufe als der zweite Programmblock auf. Insbesondere sind die Programmblöcke nach dem Standard ISO 26262 ausgebildet. Die Programmblöcke sind ferner gemäß den Einstufungen ASIL A - D oder QM klassifiziert. Der erste und der zweite Programmblock sind unterschiedlich klassifiziert.

In den Speicher können mehrere Programmblöcke der gleichen Sicherheitsstufe vorgesehen sein, wie oben anhand des Verfahrens beschrieben ist. Ferner kann in dem ersten und/oder in dem zweiten Programmblock, die in den Speicher hinterlegt sind, mehrere Aufrufe von Programmblöcken sein, die einer anderen Sicherheitsstufe angehören, als der betreffende aufrufende Programmblock.

Die Speicherschutzeinrichtung kann auch als memory protection unit, MPU bezeichnet werden. Die Speicherschutzeinrichtung kann Teil einer Speichermanagementeinheit sein, die auch als MMU (memory management unit) bezeichnet wird. Insbesondere ist ein Speicherschutzregister vorgesehen, in dem Adressen hinterlegt sind, welche die Grenzen der Abschnitte bzw. Datenabschnitte des Speichers definieren. Hierzu können beispielsweise Ausgangsadressen und Offsets hinterlegt sein. Das Speicherschutzregister ist mit der Speicherschutzeinrichtung verbunden oder Teil der Speicherschutzeinrichtung. Das Speicherschutzregister definiert somit die Abschnitte die hinsichtlich des Ablaufs bzw. des Zugriffs voneinander getrennt sind und bei übergreifenden Aufrufen oder Zugriffen eine Ausnahme ausgelöst wird. Diese Ausnahme führt zur Änderung des aktiven Abschnitts, d. h. zur Änderung des Abschnitts, der freigegeben ist. Folglich führt die Ausnahme auch zur Änderung der gesperrten Abschnitte. Die in dem Speicherschutzregister hinterlegten Daten können durch einen Linker definiert sein, der im Rahmen der Erzeugung der Programmblöcke ausgeführt wird. Dieser Linker bzw. die Steuerungsinformation mit der dieser Linker betrieben wird, definieren die Abschnitte und realisieren somit einen wesentlichen Teil der Erfindung. Das Speicherschutzregister kann ein oder mehrere Adressbereiche für spezifische Schutzmodi aufweisen. Schutzmodi sind Nur-Lese-Freigabe, Nur-Schreiben-Freigabe und insbesondere gesperrter Zugriff. Für die Definition der Abschnitte, in denen die Programmblöcke hinterlegt sind, kann ein anderes Unterregister verwendet werden, als für die Datenabschnitte, wobei die Unterregister dem Speicherschutzregister zugehören. Ferner kann ein Unterregister vorgesehen sein, in dem die Schutzmodi hinterlegt sind. Insbesondere können die Schutzmodi getrennt für die Daten und die Programmblöcke hinterlegt sein.

Als Programmblock wird ein logisch zusammenhängender Code bezeichnet, der nicht notwendigerweise als eine einzige Sequenz in dem Speicher hinterlegt ist. Vielmehr kann ein Programmblock physisch in mehreren unterschiedlichen Teilabschnitten des Speichers hinterlegt sein, soweit zum Ausführen des Programmblocks eine Speichermanagementeinheit bereitsteht, die den logischen Zusammenhang zu einem einzigen Programmblock darstellt.

Der oder die Speicher bzw. Datenspeicher können nur einmal beschreibbare Speicher oder mehrfach beschreibbare Speicher sein. Insbesondere können die Speicher nur Lesespeicher sein. Der oder die Speicher sind insbesondere Hardware-Speicher, die vorzugsweise zumindest teilweise in den Prozessor integriert sind. Der Prozessor kann insbesondere ein Mikrocontroller der Aurix Familie des Herstellers Infineon sein oder ein Mikrocontroller der Familie MPC57xx des Herstellers Freescale.

Kurzbeschreibung der Zeichnungen
- Figur 1: zeigt eine symbolische Darstellung eines Speichers zur Erläuterung des verfahrensgemäßen Verarbeitungswechsels der darin gespeicherten Programmblöcke;
- Figur 2: ist eine symbolische Darstellung einer Ausführungsform des hier offenbarten Steuergeräts.

### Detaillierte Beschreibung der Zeichnungen

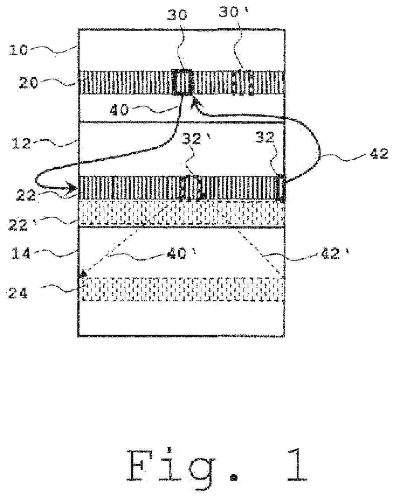

Der in Figur 1 dargestellte Speicher ist in drei Abschnitte 10, 12, 14 aufgeteilt. In den Abschnitten sind Programmblöcke 20, 22, 22', 24 abgelegt. In jedem Abschnitt 10-14 sind jeweils Programmblöcke mit einer spezifischen Klassifizierung abgelegt.

Beispielhaft sind alle Programmblöcke des Abschnitts 10, d. h. der Programmblock 20, einer ersten Sicherheitsstufe zugeordnet, während die Programmblöcke 22, 22' des Abschnitts 12 einer anderen Sicherheitsstufe zugeordnet sind, und wiederum der Programmblock 24 des Abschnitts 14 einer weiteren, zu den Programmblöcken 20, 22, 22' verschiedenen Sicherheitsstufe zugeordnet. Zunächst wird Programmblock 20 ausgeführt, der als der erste Programmblock bzw. der aufrufende Programmblock bezeichnet werden kann. Innerhalb des Programmblocks 20 befindet sich ein Aufruf 30, mit dem der Programmblock 22 des Abschnitts 12 aufgerufen wird. Der Aufruf 30 ist beispielsweise ein Funktionsaufruf, während der Programmblock 22 diese Funktion implementiert. Durch den Aufruf 30 wird auf dem Abschnitt 12 zugegriffen, welcher sich von dem Abschnitt 10 unterscheidet.

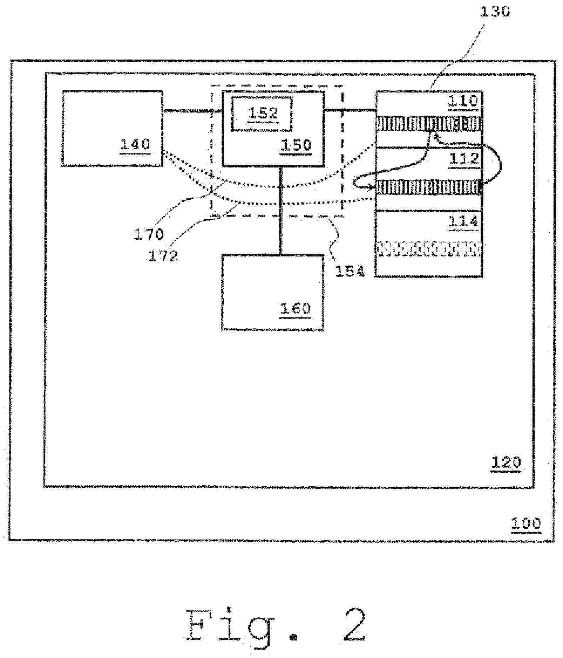

Durch den Aufruf wird von einer Speicherschutzeinrichtung(in Figur 2 näher dargestellt) eine Ausnahme ausgelöst. Die Speicherschutzeinrichtung überwacht den in Figur 1 dargestellten Speicher, um abschnittsübergreifende Zugriffe zu ermitteln und ggf. eine Ausnahme auszulösen, wenn ein Zugriff in einen Abschnitt erfolgt, der nicht dem Abschnitt entspricht, in welchem das aktuell ausgeführte Programm (im konkreten Fall Programmblock 20) ausgeführt wird.

Ein Ausnahmehandler (in Figur 2 näher dargestellt) erfasst diese Ausnahme und sperrt den ersten Abschnitt 10. Ferner gibt der Ausnahmehandler, vorzugsweise mit oder nach dem Sperren, den Abschnitt 12 frei zum Zugriff und insbesondere zur Ausführung durch einen Prozessor (in Figur 2 näher dargestellt).

Da der Abschnitt 12, in dem sich der Programmblock 22 befindet, freigegeben ist, wird dieser ausgeführt. Der Programmblock 22 kann somit als zweiter Programmblock bzw. als aufgerufener Programmblock bezeichnet werden.

Am Ende der Ausführung des zweiten Programmblocks 22 befindet sich ein Rücksprungbefehl 32, der ebenso als Aufruf anzusehen ist. Der Aufruf 32 ruft wieder den ersten Programmblock 20 auf. In dieser Situation ist der zweite Programmblock 22 der aufrufende Programmblock und der Programmblock 20 ist der aufgerufene Programmblock. Die Speicherschutzeinrichtung erfasst den abschnittsübergreifenden Aufruf, löst eine Ausnahme aus, wodurch der Ausnahmehandler den Aufruf bzw. die Ausführung des Abschnitts 12 der darin gespeicherten Programmblöcke sperrt und den Abschnitt 10 und den darin gespeicherten Programmblock 20 zur Ausführung bzw. zum Zugriff freigibt. Daraufhin wird vom Prozessor der Programmblock 20 weiter ausgeführt, gemäß der Rücksprungadresse des Aufrufs 32, der als Rücksprungbefehl fungiert.

Die Pfeile 40, 42 verdeutlichen den Ablauf und die sequentielle Ausführung der Programmblöcke 20 und 22. Der Pfeil 40 stellt dar, dass die Ausführung durch den Aufruf 30 zum Programmblock 22 übergeht. Der Pfeil 42 stellt dar, dass nach dem Rücksprungbefehl 32 der Programmblock 20 weiter ausgeführt wird, nämlich mit dem nach dem Aufruf 30 folgenden Code innerhalb des Programmblocks 20. Die Pfeile 40, 42 zeigen, wie von einem Programmblock eines Abschnitts auf den Programmblock eines anderen Abschnitts gewechselt wird. Der Pfeil 40 gibt den Aufruf eines Unterprogramms durch ein Hauptprogramm wieder, wobei das Hauptprogramm vor dem Programmblock 20 dargestellt ist und das Unterprogramm von Programmblock 22 dargestellt ist.

Weitere optionale Komponenten bzw. Verfahrensschritte sind gestrichelt dargestellt. Der Aufruf 30' des Programmblocks 20 entspricht einem weiteren Aufruf innerhalb des Programmblocks 20. Dieser kann weitere Programmblöcke aufrufen (nicht dargestellt).

Ferner ist dargestellt, dass der Programmblock 22 als Unterprogramm einen weiteren Unterprogrammaufruf 32' umfassen kann, der einen weiteren Codeblock 24 in einem weiteren Abschnitt 14 aufruft. Die Pfeile 40' und 42' geben den Wechsel des auszuführenden Programmblocks und damit des zur Ausführung freigegebenen Abschnitts wieder. Durch Pfeil 40' wird wiedergegeben, dass die Freigabe des Abschnitts 12 zu Abschnitt 14 wechselt, während Abschnitt 12 gesperrt wird und die Sperrung des Abschnitts 14 aufgehoben wird. Der Pfeil 42' gibt wieder, wie nach der Ausführung des Programmblocks 24 zu dem Aufruf 32' des Programmblocks 22 zurückgesprungen wird. Der Wechsel kann somit über mehr als zwei Abschnitte des Speichers hinweg durchgeführt werden, wobei die Wechsel verfahrensgemäß durchgeführt werden.

Der erste Wechsel des Beispiels von Figur 1 wird durch Pfeil 40 wiedergegeben, der zweite Wechsel wird durch Pfeil 40' wiedergegeben, der dritte Wechsel wird durch Pfeil 42' wiedergegeben und der vierte Wechsel wird durch Pfeil 42 wiedergegeben. Die Pfeile 42, 42' gehen auf Rücksprungbefehle zurück, die Teil des Programmblocks sein können oder von einer Ausführungssteuerung ausgeführt werden, wenn der betreffende Programmblock zu Ende ausgeführt ist. Die Pfeile 40, 40' gehen auf abschnittübergreifende Aufrufe von Programmblöcken zurück und stellen die Wechsel dar, die sich durch Aufrufe (des Beginns) eines Programmblocks entstehen, d.h. durch Prozedur- oder Funktionsaufrufe.

Beispielhaft zeigt der Programmblock 22', dass in ein und demselben Abschnitt mehrere Programmblöcke vorgesehen sein können, nämlich der Programmblock 22 und 22'. Ruft der Programmblock 22 den Programmblock 22' auf (nicht dargestellt), dann wird von der Speicherschutzeinrichtung keine Ausnahme ausgelöst, da der Aufruf nicht abschnittsübergreifend ist.

Die Figur 2 zeigt eine Ausführungsform eines hier offenbarten Steuergeräts 100 in symbolischer Darstellung. Das Steuergerät 100 umfasst eine Datenverarbeitungsvorrichtung 120. Die Datenverarbeitungsvorrichtung 120 umfasst einen Speicher 130, der insbesondere wie der Speicher in Figur 1 ausgebildet sein kann. Der Speicher 130 ist in Abschnitte 110, 112 und 114 aufgeteilt, denen jeweils unterschiedliche Sicherheitsstufen zugeordnet sind. Insbesondere sind die Programmblöcke innerhalb der Abschnitte mit einer Sicherheitsstufe versehen, die für jeden Abschnitt gleich ist, wobei sich die Sicherheitsstufen von Programmblöcken in unterschiedlichen Abschnitten 110-114 unterscheiden.

Die Datenverarbeitungsvorrichtung 120 umfasst ferner einen Prozessor 140, der auf den Speicher zugreift. Die logische Verbindung, die den Zugriff symbolisiert, sind durch die Verbindungen 170, 172 (gepunktet) dargestellt.

Die Datenverarbeitungsvorrichtung 120 des Steuergeräts 100 umfasst ferner eine Speicherschutzeinrichtung 150. Diese ist mit einem Speicherschutzregister 152 ausgestattet, welches die Abschnitte des Speichers 130 definiert und insbesondere deren Grenzen.

Das Speicherschutzregister 152 kann auch außerhalb der Speicherschutzeinrichtung 150 vorgesehen sein als Register, vorzugsweise innerhalb der Datenverarbeitungsvorrichtung, welches mit der Speicherschutzeinrichtung 150 direkt oder indirekt verbunden ist.

Die Datenverarbeitungsvorrichtung 120 umfasst ferner einen Ausnahmehandler 160. Aufgrund der unterschiedlichen Funktionen sind die Komponenten 140, 150, 160 als einzelne Blöcke dargestellt, wobei diese zumindest teilweise miteinander integriert sein können. Insbesondere kann die Speicherschutzeinrichtung und/oder der Ausnahmehandler in den Prozessor 140 integriert sein. Dies trifft auch für den Speicher 130 zu. Alternativ kann der Speicher 130 außerhalb des Prozessors vorgesehen sein.

Der Prozessor 140 greift lesend und schreibend auf den Speicher 130 zu. Dieser Zugriff geschieht über eine Speichermanagementeinheit 154, die ebenso in dem Prozessor 130 integriert sein kann. Die Speichermanagementeinheit 154 realisiert dadurch die logischen Verbindungen 170, 172, welche von entsprechenden Zugriffen genutzt werden. Es ist ersichtlich, dass der Prozessor 170, 172 auch zwei verschiedene Abschnitte 110, 112 des Speichers 130 zugreift. Besteht die logische Verbindung 170, so wird von der Speicherschutzeinrichtung bzw. von der Speichermanagementeinheit 154, in der sich die Speicherschutzeinrichtung 150 befindet, der Zugriff des Prozessors 140 auf den zweiten Abschnitt 112 gesperrt, so dass die logische Verbindung 172 gesperrt wird.

Wird nun, wie anhand von Figur 1 beschrieben, der zweite Abschnitt 112 freigegeben und der erste Abschnitt 110 gesperrt, etwa durch einen Aufruf, wie er mit dem Bezugszeichen 30 in Figur 1 dargestellt ist, dann wird die logische Verbindung 170 deaktiviert bzw. gesperrt und die logische Verbindung 172 wird freigegeben. Das Sperren und das Freigeben wird von der Speicherschutzeinrichtung 150 bzw. von der Speichermanagementeinheit 154 durchgeführt.

Befindet sich die Ausführung des in Abschnitt 112 gespeicherten Programmblocks am Ende, so wird ein Rücksprung ausgeführt, vgl. Pfeil 42 der Figur 1. Dadurch wird die logische Verbindung 172 gesperrt und die logische Verbindung 170 freigegeben. Die Ausführung des in Abschnitt 110 gespeicherten Programmblocks wird dann weiter geführt.

Das Sperren und das Freigeben wird mittels der Speicherschutzeinrichtung 150 durchgeführt, die anhand des Speicherschutzregisters 152 erkennt, welcher der Abschnitte 110-114 des Speichers 130 gerade zum Zugriff freigegeben ist, und welche nicht.

Wird zu einem Programmblock in einem ersten Abschnitt 110 auf einen Programmblock in einem zweiten Abschnitt 112 zugegriffen, so erkennt dies die Speicherschutzeinrichtung, insbesondere anhand des Speicherschutzregisters 152 und deren darin gespeicherten Adressdaten, und löst eine Ausnahme aus. Dieser wird an den Ausnahmehandler 160 weitergegeben.

Der Ausnahmehandler 160 sperrt dadurch den ersten Abschnitt durch Sperren der ersten logischen Verbindung 170 und Freigeben der zweiten logischen Verbindung 172. Das Sperren und Freigeben wird durch entsprechende Signale des Ausnahmehandlers 160 ausgeführt, die an die Speichermanagementeinheit 154 und insbesondere an die Speicherschutzeinrichtung 150 weitergegeben werden.

### Bezugszeichenliste

- 10, 12, 14: Abschnitte des Speichers 130
- 20, 22, 22', 24: Programmblöcke
- 30, 30', 32, 32': Aufrufe, insbesondere eines Programmblocks, der in einem anderen Abschnitt als der aufgerufene Block vorliegt
- 40, 40', 42, 42': Aufrufe bzw. Rücksprungbefehle
- 100: Steuergerät
- 120: Datenverarbeitungsvorrichtung
- 130: Speicher
- 110, 112, 114: Abschnitte des Speichers 130
- 140: Prozessor
- 150: Speicherschutzeinrichtung
- 152: Speicherschutzregister
- 154: Speichermanagementeinheit
- 160: Ausnahmehandler
- 170, 172: logische Verbindungen zwischen dem Prozessor und Speicher, die von der Speichermanagementeinheit bzw. von der Speicherschutzeinrichtung gesperrt oder freigegeben werden

## Patentansprüche

1. Verfahren zur Steuerung eines getrennten Ablaufs von verknüpften Programmblöcken (20 - 24), die zur Umsetzung von Funktionen sicherheitsrelevanter Systeme, vorzugsweise in Kraftfahrzeugen, ausgebildet sind,
mit den Schritten:
Ausführen eines ersten der Programmblöcke (20) auf einem Prozessor (140), wobei der erste Programmblock (20) in einem ersten Abschnitt (10, 110) eines Speichers (130) vorliegt und der Prozessor (140) auf den Speicher (130) zugreift, wobei während des Ausführens des ersten Programmblocks (20) ein zweiter der Programmblöcke (22) aufgerufen wird, und der zweite Programmblock (22) in einem zweiten Abschnitt (12, 112) vorliegt, der verschieden zu dem ersten Abschnitt (10, 110) des Speichers (130) ist;
Überwachen des Zugriffs auf den Speicher (130) durch eine Speicherschutzeinrichtung (150), wobei die Speicherschutzeinrichtung (150) eine Ausnahme auslöst, wenn bei dem Überwachen des Zugriffs von der Speicherschutzeinrichtung (150) ermittelt wird, dass während des Ausführens des ersten der Programmblöcke (20) der zweite der Programmblöcke (22) aufgerufen wird, wobei der zweite Programmblock (22) während des Ausführens des ersten Programmblocks (20) von einem Task-Manager aufgerufen wird oder der zweite Programmblock (22) von einem Befehl des ersten Programmblocks (20) aufgerufen wird,
wobei ein Ausnahmehandler (160) bei Auftreten der Ausnahme den ersten Abschnitt (10, 110) vor einem Zugriff zum Ausführen des ersten Programmblocks (20) sperrt und den zweiten Abschnitt (12, 112) zur Ausführung freigibt.

2. Verfahren nach Anspruch 1, wobei nach dem Freigeben des zweiten Abschnitts (12, 112) der zweite Programmblock (22) ausgeführt wird und zum Ende des Ausführens des zweiten Programmblocks (22) ein Rücksprung (42) stattfindet, durch den der zweite Abschnitt (12, 112) von dem Ausnahmehandler (160) gesperrt wird und der erste Abschnitt (10, 11) von dem Ausnahmehandler (160) zur Ausführung freigegeben wird und insbesondere durch den Rücksprung eine weitere Ausnahme ausgelöst wird, wobei der Ausnahmehandler (160) beim Auftreten dieser weiteren Ausnahme den zweiten Abschnitt (12, 112) sperrt und den ersten Abschnitt (10, 110) zur Ausführung freigibt.

3. Verfahren nach Anspruch 1 oder 2, wobei während des Ausführens des ersten oder des zweiten Programmblocks (20, 22) mindestens ein weiterer Programmblock (24) aufgerufen wird, der in einem Abschnitt (14) des Speichers (130) vorliegt, der zu den Abschnitten (10, 110, 12, 112) des ersten und des zweiten Programmblocks (20, 22) verschieden ist; die Speicherschutzeinrichtung (150) eine Ausnahme auslöst, wenn der weitere Programmblock (24) aufgerufen wird, der Ausnahmehandler (160) bei Auftreten dieser Ausnahme denjenigen Abschnitt (12) des Speichers (30) sperrt, in welchem der aufrufende Programmblock (22) vorliegt, und den Abschnitt (14, 114) des Speichers (130) freigibt, in dem der aufgerufene Programmblock (24) vorliegt, und der aufgerufene Programmblock (24) nach dem Freigeben von dem Prozessor (130) ausgeführt wird.

4. Verfahren nach einem der vorangehenden Ansprüchen, wobei der Zugriff auf den zweiten Abschnitt (12, 112) durchgehend gesperrt ist, während der erste Programmblock (20) ausgeführt wird, und der Zugriff auf den ersten Abschnitt (10, 110) durchgehend gesperrt ist, während der zweite Programmblock (22) ausgeführt wird.

5. Verfahren nach einem der vorangehenden Ansprüche, wobei dem ersten Programmblock ein erster Datenabschnitt für Daten zugeordnet ist, die von dem ersten Programmblock gespeichert und insbesondere auch gelesen werden, und dem zweiten Programmblock einen zweiten, zum ersten Datenabschnitt verschiedenen Datenabschnitt für Daten zugeordnet ist, die von dem ersten Programmblock gespeichert und insbesondere auch gelesen werden, wobei der Ausnahmehandler den ersten Datenabschnitt sperrt, wenn durch Aufrufen des zweiten Programmblocks durch den ersten Programmblocks eine Ausnahme ausgelöst wird, und der Ausnahmehandler den zweiten Datenabschnitt sperrt, wenn durch Aufrufen des ersten Programmblocks durch den zweiten Programmblock eine Ausnahme ausgelöst wird.

6. Verfahren nach einem der vorangehenden Ansprüche, wobei dem ersten Programmblock (20) eine andere Sicherheitsstufe als dem zweiten Programmblock (22) zugeordnet ist, und insbesondere die Programmblöcke (20 - 24) nach dem Standard ISO 26262 ausgebildet sind und gemäß den Einstufungen ASIL A - D oder QM klassifiziert sind, wobei der erste und der zweite Programmblock (20, 24) unterschiedlich klassifiziert sind.

7. Verfahren nach einem der vorangehenden Ansprüche, wobei die Ausnahme ein Interrupt oder eine Exception ist, insbesondere ein Hardwareinterrupt oder ein Softwareinterrupt, der Interrupt innerhalb oder außerhalb des Prozessors ausgelöst und/oder verarbeitet wird, der Interrupt maskierbar oder nicht maskierbar ist, oder der Interrupt einer Trap-Ausnahme oder einer Fault-Ausnahme entspricht.

8. Verfahren nach einem der vorangehenden Ansprüche, wobei eine Ausnahme, die ausgelöst wird, wenn ein Programmblock (20) einen Programmblock (22) mit anderer und insbesondere höherer Sicherheitsstufe aufruft, von dem Ausnahmehandler (160) mit einer anderen und insbesondere höheren Priorität abgearbeitet wird, als eine Ausnahme, die ausgelöst wird, wenn ein Programmblock (20) einen Programmblock (22) mit anderer und insbesondere geringerer Sicherheitsstufe aufruft.

9. Steuergerät (100), insbesondere für Fahrzeuge, mit einer Datenverarbeitungsvorrichtung (120), die einen Speicher (130), einen Prozessor (140) und eine Speicherschutzeinrichtung (150) umfasst, wobei
der Speicher (130) mit dem Prozessor (140) verbunden ist und ein erster sowie mindestens ein zweiter Programmblock (20, 22) in ersten und zweiten, zueinander verschiedenen Abschnitten (10, 110; 12, 112) des Speichers (130) vorliegen, wobei der erste und der mindestens eine zweite Programmblock (20, 22) miteinander verknüpft sind, indem der zweite Programmblock (22) während des Ausführens des ersten Programmblocks (20) von einem Task-Manager aufgerufen wird oder der zweite Programmblock (22) von einem Befehl des ersten Programmblocks (20) aufgerufen wird, und ferner die Speicherschutzeinrichtung (150) mit einer Programmierung oder mit einer Verbindung zu dem Speicher (130) ausgestaltet ist, welche die Speicherschutzeinrichtung (150) zum Auslösen einer Ausnahme veranlasst, wenn der erste, in dem ersten Abschnitt (110) vorliegende Programmblock (20), den zweiten, in dem zweiten Abschnitt (112) vorliegende Programmblock (22) aufruft; wobei die Datenverarbeitungsvorrichtung (120) ferner einen Ausnahmehandler (160) aufweist, der mit der Speicherschutzeinrichtung (150) zum Empfang der Ausnahme verbunden ist, und
der Ausnahmehandler (160) mit der Speicherschutzeinrichtung (150) verbunden und dadurch eingerichtet ist, um beim Empfang der Ausnahme eine logische Verbindung (170) zwischen dem ersten Abschnitt (10, 110) des Speichers (130) und dem Prozessor (140) vor einem Zugriff zum Ausführen des ersten Programmblocks (20) zu sperren und eine logische Verbindung (172) zwischen dem zweiten Abschnitt (12, 112) des Speichers (130) und dem Prozessor (140) zur Ausführung des zweiten Programmblocks (22) auf dem Prozessor (140) freizugeben.

10. Steuergerät (100) nach Anspruch 9, wobei der erste Programmblock (20) eine andere Sicherheitsstufe als der zweiten Programmblock (22) aufweist, und insbesondere die Programmblöcke (22 - 24) nach dem Standard ISO 26262 ausgebildet sind und gemäß den Einstufungen ASIL A - D oder QM klassifiziert sind, wobei der erste und der zweite Programmblock (20; 22) unterschiedlich klassifiziert sind.

## Claims

1. Method for controlling separate running of linked program blocks (20-24) that are designed for implementing functions of safety-relevant systems, preferably in motor vehicles,
having the steps of:
execution of a first of the program blocks (20) on a processor (140), wherein the first program block (20) is present in a first section (10, 110) of a memory (130) and the processor (140) accesses the memory (130), wherein during the execution of the first program block (20) a second of the program blocks (22) is called, and the second program block (22) is present in a second section (12, 112), which is different than the first section (10, 110) of the memory (130);
monitoring of the access to the memory (130) by a memory protection device (150), wherein the memory protection device (150) triggers an exception if the monitoring of the access by the memory protection device (150) prompts ascertainment that during the execution of the first of the program blocks (20) the second of the program blocks (22) is called, wherein the second program block (22) is called by a task manager during the execution of the first program block (20) or the second program block (22) is called by a command in the first program block (20),
wherein occurrence of the exception prompts an exception handler (160) to disable the first section (10, 110) for access for the execution of the first program block (20) and to enable the second section (12, 112) for execution.

2. Method according to Claim 1, wherein after the enablement of the second section (12, 112) the second program block (22) is executed and at the end of the execution of the second program block (22) a return (42) takes place that causes the second section (12, 112) to be disabled by the exception handler (160) and the first section (10, 11) to be enabled by the exception handler (160) for execution, and the return triggers a further exception, in particular, wherein the occurrence of said further exception prompts the exception handler (160) to disable the second section (12, 112) and to enable the first section (10, 110) for execution.

3. Method according to Claim 1 or 2, wherein during the execution of the first or the second program block (20, 22) at least one further program block (24) is called that is present in a section (14) of the memory (130), which is different than the sections (10, 110, 12, 112) for the first and second program blocks (20, 22); the memory protection device (150) triggers an exception when the further program block (24) is called, occurrence of this exception prompts the exception handler (160) to disable that section (12) of the memory (30) that contains the calling program block (22) and to enable the section (14, 114) of the memory (130) that contains the called program block (24), and the called program block (24) is executed by the processor (130) following enablement.

4. Method according to one of the preceding claims, wherein access to the second section (12, 112) is continuously disabled while the first program block (20) is executed, and access to the first section (10, 110) is continuously disabled while the second program block (22) is executed.

5. Method according to one of the preceding claims, wherein the first program block has an associated first data section for data that are stored by the first program block and particularly also read, and the second program block has an associated second data section, which is different than the first data section, for data that are stored by the second program block and particularly also read, wherein the exception handler disables the first data section when calling of the second program block by the first program block triggers an exception, and the exception handler disables the second data section when calling of the first program block by the second program block triggers an exception.

6. Method according to one of the preceding claims, wherein the first program block (20) has a different associated safety level than the second program block (22), and particularly the program blocks (20-24) are formed on the basis of ISO standard 26262 and are classified in accordance with the ASIL categorizations A - D or QM, the first and second program blocks (20, 24) being classified differently.

7. Method according to one of the preceding claims, wherein the exception is an interrupt or an exception, particularly a hardware interrupt or a software interrupt, the interrupt is triggered and/or processed inside or outside the processor, the interrupt is maskable or unmaskable, or the interrupt corresponds to a trap exception or to a fault exception.

8. Method according to one of the preceding claims, wherein an exception that is triggered when a program block (20) calls a program block (22) with a different and, in particular, higher safety level is executed by the exception handler (160) with a different and, in particular, higher priority than an exception that is triggered when a program block (20) calls a program block (22) with a different and, in particular, lower safety level.

9. Controller (100), particularly for vehicles, having a data processing apparatus (120) that comprises a memory (130), a processor (140) and a memory protection device (150), wherein the memory (130) is connected to the processor (140) and a first and also at least one second program block (20, 22) are present in first and second sections (10, 110; 12, 112) of the memory (130), which are different than one another, wherein the first and the at least one second program block (20, 22) are linked to one another in that the second program block (22) is called by a task manager during the execution of the first program block (20) or the second program block (22) is called by a command in the first program block (20), and additionally the memory protection device (150) is embodied with programming or with a connection to the memory (130 that prompts the memory protection device (150) to trigger an exception when the first program block (20), which is present in the first section (110), calls the second program block (22), which is present in the second section (112); wherein the data processing apparatus (120) additionally has an exception handler (160) that is connected to the memory protection device (150) for the purpose of receiving the exception, and
the exception handler (160) is connected to the memory protection device (150) and thereby set up to be prompted by the reception of the exception to disable a logical connection (170) between the first section (10, 110) of the memory (130) and the processor (140) for access for the execution of the first program block (20) and to enable a logical connection (172) between the second section (12, 112) of the memory (130) and the processor (140) in order to execute the second program block (22) on the processor (140).

10. Controller (100) according to Claim 9, wherein the first program block (20) has a different safety level than the second program block (22), and particularly the program blocks (22-24) are formed on the basis of ISO standard 26262 and are classified in accordance with the ASIL categorizations A - D or QM, the first and second program blocks (20; 22) being classified differently.

## Revendications

1. Procédé destiné à commander un déroulement séparé de blocs de programme combinés (20 - 24), qui sont réalisés pour la mise en oeuvre de fonctions des systèmes importants pour la sécurité, de préférence dans des véhicules automobiles, comportant les étapes consistant à :
exécuter un premier des blocs de programme (20) sur un processeur (140), dans lequel le premier bloc de programme (20) se trouve dans une première section (10, 110) d'une mémoire (130) et le processeur (140) accède à la mémoire (130), dans lequel un deuxième des blocs de programme (22) est appelé pendant l'exécution du premier bloc de programme (20), et le deuxième bloc de programme (22) se trouve dans une deuxième section (12, 112) qui est différente de la première section (10, 110) de la mémoire (130) ;
surveiller l'accès à la mémoire (130) au moyen d'un dispositif de protection de mémoire (150), dans lequel le dispositif de protection de mémoire (150) déclenche une exception lorsqu'il est déterminé par le dispositif de protection de mémoire (150), lors de la surveillance de l'accès, que le deuxième des blocs de programme (22) est appelé pendant l'exécution du premier des blocs de programme (20), dans lequel le deuxième bloc de programme (22) est appelé pendant l'exécution du premier bloc de programme (20) par un gestionnaire de tâches ou le deuxième bloc de programme (22) est appelé par une instruction du premier bloc de programme (20),
dans lequel un gestionnaire d'exceptions (160), lors de l'apparition de l'exception, bloque un accès à la première section (10, 110) pour l'exécution du premier bloc de programme (20) et débloque la deuxième section (12, 112) pour l'exécution.

2. Procédé selon la revendication 1, dans lequel le deuxième bloc de programme (22) est exécuté après le déblocage de la deuxième section (12, 112) et dans lequel il se produit un retour arrière (42) à la fin de l'exécution du deuxième bloc de programme (22), par l'intermédiaire duquel la deuxième section (12, 112) est bloquée par le gestionnaire d'exceptions (160) et la première section (10, 11) est débloquée par le gestionnaire d'exceptions (160) pour l'exécution, et une autre exception est notamment déclenchée par le retour arrière, dans lequel, lors de l'apparition de ladite autre exception, le gestionnaire d'exceptions (160) bloque la deuxième section (12, 112) et débloque la première section (10, 110) pour l'exécution.

3. Procédé selon la revendication 1 ou 2, dans lequel au moins un autre bloc de programme (24) est appelé pendant l'exécution du premier ou du deuxième bloc de programme (20, 22), celui-ci se trouvant dans une section (14) de la mémoire (130) qui est différente des sections (10, 110, 12, 112) des premier et deuxième blocs de programme (20, 22) ; le dispositif de protection de mémoire (150) déclenche une exception lorsque l'autre bloc de programme (24) est appelé, le gestionnaire d'exceptions (160), lors de l'apparition de ladite exception, bloque la section (12) de la mémoire (30) dans laquelle se trouve le bloc de programme appelant (22) et débloque la section (14, 114) de la mémoire (130) dans laquelle se trouve le bloc de programme appelé (24), et après le déblocage, le bloc de programme appelé (24) est exécuté par le processeur (130).

4. Procédé selon l'une quelconque des revendications précédentes, dans lequel l'accès à la deuxième section (12, 112) est bloqué en continu pendant que le premier bloc de programme (20) est exécuté et l'accès à la première section (10, 110) est bloqué en continu pendant que le deuxième bloc de programme (22) est exécuté.

5. Procédé selon l'une quelconque des revendications précédentes, dans lequel un premier segment de données destiné à des données est associé au premier bloc de programme, lesquelles données sont stockées et notamment également lues par le premier bloc de programme, et un deuxième segment de données destiné à des données, qui est différent du premier segment de données, est associé au deuxième bloc de programme, lequel deuxième segment de données est stocké et est notamment également lu par le premier bloc de programme, dans lequel le gestionnaire d'exceptions bloque le premier segment de données lorsqu'une exception est déclenchée par appel au deuxième bloc de programme par le premier bloc de programme, et le gestionnaire d'exceptions bloque le deuxième segment de données lorsqu'une exception est déclenchée par appel au premier bloc de programme par le deuxième bloc de programme.

6. Procédé selon l'une quelconque des revendications précédentes, dans lequel un autre niveau de sécurité que le deuxième bloc de programme (22) est associé au premier bloc de programme (20), et les blocs de programme (20 - 24) sont notamment réalisés selon la norme ISO 26262 et sont classés conformément aux classements ASIL A - D ou QM, dans lequel les premier et deuxième blocs de programme (20, 24) sont classés différemment.

7. Procédé selon l'une quelconque des revendications précédentes, dans lequel l'exception est une interruption ou une exception, notamment une interruption matérielle ou une interruption logicielle, l'interruption est déclenchée et/ou ou traitée à l'intérieur ou à l'extérieur du processeur, l'interruption peut être masquée ou peut ne pas être masquée, ou l'interruption correspond à une exception de déroutement ou à une exception de défaut.

8. Procédé selon l'une quelconque des revendications précédentes, dans lequel une exception qui est déclenchée lorsqu'un bloc de programme (20) appelle un bloc de programme (22) ayant un autre niveau de sécurité, et ayant notamment un niveau de sécurité plus élevé, est traitée par le gestionnaire d'exceptions (160) avec une autre priorité et notamment avec une priorité plus élevée qu'une exception qui est déclenchée lorsqu'un bloc de programme (20) appelle un bloc de programme (22) ayant un autre niveau de sécurité et ayant notamment un plus faible niveau de sécurité.

9. Appareil de commande (100), notamment destiné à des véhicules, comportant un dispositif de traitement de données (120) qui comprend une mémoire (130), un processeur (140) et un dispositif de protection de mémoire (150), dans lequel la mémoire (130) est reliée au processeur (140), et un premier et au moins un deuxième bloc de programme (20, 22) se trouvent dans des première et deuxième sections (10, 110 ; 12, 112) de la mémoire (130) qui sont différentes l'une de l'autre, dans lequel le premier et l'au moins un deuxième bloc de programme (20, 22) sont combinés l'un à l'autre, en faisant en sorte que le deuxième bloc de programme (22) soit appelé par un gestionnaire de tâches pendant l'exécution du premier bloc de programme (20) ou que le deuxième bloc de programme (22) soit appelé par une instruction du premier bloc de programme (20), et le dispositif de protection de mémoire (150) est en outre doté d'une programmation ou d'une liaison à la mémoire (130), qui ordonne le déclenchement par le dispositif de protection de mémoire (150) d'une exception lorsque le premier bloc de programme (20) se trouvant dans la première section (110) appelle le deuxième bloc de programme (22) se trouvant dans la deuxième section (112) ; dans lequel
le dispositif de traitement de données (120) comporte en outre un gestionnaire d'exceptions (160) qui est relié au dispositif de protection de mémoire (150) pour recevoir l'exception, et le gestionnaire d'exceptions (160) est relié au dispositif de protection de mémoire (150) et est ainsi conçu pour empêcher, lors de la réception de l'exception, un accès à une liaison logique (170) entre la première section (10, 110) de la mémoire (130) et le processeur (140) pour l'exécution du premier bloc de programme (20), et pour débloquer une liaison logique (172) entre la deuxième section (12, 112) de la mémoire (130) et le processeur (140) pour l'exécution du deuxième bloc de programme (22) sur le processeur (140).

10. Appareil de commande (100) selon la revendication 9, dans lequel le premier bloc de programme (20) présente un autre niveau de sécurité que le deuxième bloc de programme (22), et les blocs de programme (22 - 24) sont notamment réalisés selon la norme ISO 26262 et sont classés conformément aux classements ASIL A - D ou QM, dans lequel les premier et deuxième blocs de programme (20 ; 22) sont classés différemment.
